# EUROPÄISCHE PATENTSCHRIFT

(11) **EP 1 459 857 B1**
(45) Veröffentlichungstag und Bekanntmachung des Hinweises auf die Patenterteilung: **24.07.2013**
(21) Anmeldenummer: 04006191.3
(22) Anmeldetag: 16.03.2004
(51) Int. Cl.: B27F 5/02, B23Q 11/06

(54) **Handarbeitsgerät mit feststellbarem Frässcheibengehäuse**
Hand tool with adjustable rotary cutter housing
Outil à main avec protection ajustable pour fraise circulaire

(30) Priorität: 19.03.2003 DE 20304448 U
(43) Veröffentlichungstag der Anmeldung: 22.09.2004
(73) Patentinhaber: Berhalter, Eberhard, 88074 Meckenbeuren (DE)
(72) Erfinder: Berhalter, Eberhard, 88074 Meckenbeuren (DE)
(74) Vertreter: Engelhardt, Volker

(56) Entgegenhaltungen:
- US-A- 2 741 282
- US-A- 4 924 635
- US-A- 5 384 985
- US-A- 5 637 035

## Beschreibung

Die Erfindung bezieht sich auf ein Handarbeitsgerät gemäß dem Oberbegriff des Anspruchs 1. Eine solche Vorrichtung ist aus US 4 924 635 bekannt.

Aus der US 5,657,804 ist ein solches Handarbeitsgeräte bekannt. Die Rotationsachse der Frässcheibe verläuft dabei senkrecht zu der Mittelachse des Haltegriffes, an dem das Handarbeitsgerät manuell zu bedienen ist. Des Weiteren ist die Austrittsöffnung der Frässcheibe, die in dem Gehäuse des Handarbeitsgerätes vorgesehen ist, auf der dem Haltegriff - in bezug auf die Rotationsachse - gegenüberliegend angeordnet.

Als nachteilig bei diesem Handarbeitsgerät ist anzusehen, dass der Haltegriff des Handarbeitsgerätes fest an dem Gehäuse, in dem die Frässcheibe angeordnet ist, befestigt ist.

Es ist daher Aufgabe der Erfindung, ein Handarbeitsgerät der eingangs genannten Gattung derart weiterzubilden, dass der Haltegriff des Handarbeitsgerätes um die Rotationsachse der Frässcheibe in unterschiedliche Winkelpositionen feststellbar ist, um für jeden Benutzer des Handarbeitsgerätes individuell die optimale Arbeitsposition des Haltegriffes in bezug auf die Austrittsöffnung der Frässcheibe einstellen zu können.

Frässcheibe veränderbar sein und gleichzeitig ist zu gewährleisten, dass die Arretierung der Abdeckhaube am Gehäuse zuverlässig erfolgt.

Zur Verstellung der Abdeckhaube ist ein Hebelarm vorgesehen, der gegen die Kraft einer Feder die am Gehäuse und am Hebelarm abgestützt ist, bewegt werden kann. Durch Anheben des Hebelarmes wird nämlich ein mit diesem verbundener Stift aus einer Bohrung, die in die Abdeckhaube eingearbeitet ist, bewegt, so dass die Abdeckhaube die am Antriebsflansch drehbar gelagert ist, verstellt werden kann.

Wird die Kraft am Hebelarm verringert, drückt die Feder den Stift in eine weitere Bohrung der Abdeckhaube, so dass diese festgesetzt ist.

Um ein axiales Verschieben der Bauteile zu verhindern, sind mehrere Scheiben und Springfedern vorgesehen, die sich in Ringsegmenten abstützen, die in den Umfang der Frässcheibe eingearbeitet sind.

Aufgabe der Erfindung ist eine Arretiervorrichtung zu verbessern.

Diese Aufgabe wird erfindungsgemäß durch die Merkmale des Anspruchs 1 gelöst.

Vorteilhafte Weiterbildungen der Erfindung ergeben sich aus den Merkmalen der Unteransprüche.

Es ist besonders vorteilhaft, dass der Haltegriff um die Rotationsachse der Frässcheibe in unterschiedliche Winkelpositionen verschwenkt und in diesen arretiert werden kann, so dass ein Benutzer individuell festlegt, in welche Halteposition für welche vorzunehmenden Tätigkeiten der Haltegriff auszurichten ist, und zwar in bezug auf die Austrittsöffnung der Frässcheibe.

In der Zeichnung sind zwei erfindungsgemäße Ausführungsbeispiele dargestellt, die nachfolgend näher erläutert werden. Im Einzelnen zeigt:
- Figur 1: eine erste Ausführungsvariante eines Handarbeitsgeräts mit einem Gehäuse, in dem eine Frässcheibe rotierend angeordnet ist, im Schnitt,
- Figur 2: eine zweite Ausführungsvariante eines Handarbeitsgeräts mit einem Gehäuse, in dem eine Frässcheibe rotierend angeordnet ist, im Schnitt, und
- Figur 3: das Handarbeitsgerät gemäß Figur 1, in Draufsicht.

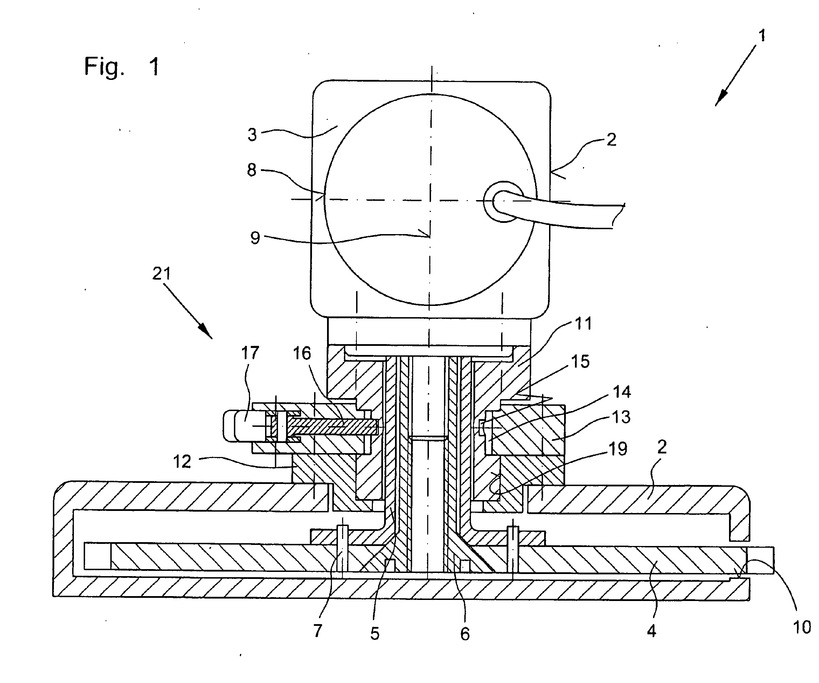

In Figur 1 ist ein Handarbeitsgerät 1 zur Bearbeitung von Werkstücken dargestellt, das aus einem Gehäuse 2 und aus einem Motor 3 für den Antrieb einer in dem Gehäuse 2 angeordneten Frässcheibe 4 besteht. Der Motor 3 und die Frässcheibe 4 sind trieblich über eine Antriebswelle 5 miteinander verbunden. Die Frässcheibe 4 ist an der Antriebswelle 5 mittels einer Befestigungsschraube 6 befestigt. Zur Kraftübertragung sind an der Antriebswelle 5 zwei Scherstifte 7 vorgesehen, die entsprechende Durchgangsbohrungen in der Frässcheibe 4 durchgreifen.

Das Handarbeitsgerät 1 wird manuell über einen Haltegriff 8 bedient, der senkrecht zu der Rotationsachse 9 der Frässcheibe 4 angeordnet ist. Um die Frässcheibe 4 aus dem Gehäuse 2 verfahren zu können, ist in diesem eine Austrittsöffnung 10 eingearbeitet.

Um den Haltegriff 8 des Handarbeitsgerätes 1 gegenüber der Rotationsachse 9 der Frässcheibe 4 in unterschiedliche Winkelpositionen ausrichten zu können, ist in dem dem Haltegriff 8 zugewandten Seite des Gehäuses 2 eine Arretiervorrichtung 21, die nachfolgend näher erläutert wird, eingesetzt.

Die Arretiervorrichtung 21 besteht aus einem Zwischenglied 12, das an dem Gehäuse 2 mittels schematisch dargestellter Schrauben fest verbunden ist. In dem Zwischenglied 12 ist eine Aufnahmebohrung 19 eingearbeitet, in die eine Hülse 11 eingeführt ist. Die Hülse 11 umschließt die Antriebswelle 5 vollständig. Des Weiteren ist in die Hülse 11 umlaufend eine Ausnehmung 14 vorgesehen, in die zwei Haltebacken 13, die fluchtend gegenüberliegend zueinander angeordnet sind, eingreifen und eine Bewegung der Hülse 11 in Richtung der Rotationsachse 9 verhindern. Die beiden Haltebacken 13 sind lösbar mit dem Zwischenglied 12 verbunden, so dass diese von dem Zwischenglied 12 zur Demontage bzw. Montage der Hülse 11 abgenommen werden können.

Die Hülse 11 ist zusammen mit den in ihr gelagerten Bauteilen, nämlich der Antriebswelle 5 und deren nicht dargestelltes Lager, relativ gegenüber dem Zwischenglied 12 und den Haltebacken 13 verschwenkbar. Zur Befestigung und Halterung der Hülse 11 um die Rotationsachse 9 sind in die Hülse 11 eine Vielzahl von Bohrungen 15 eingearbeitet.

Mit den Bohrungen 15 wirkt ein Stift 16 zusammen, der in einem der Haltebacken 13 in einer Bohrung axial beweglich gehalten ist. Folglich ist der Stift 16 senkrecht gegenüber der Rotationsachse 9 in dem Haltebacken 13 beweglich und fluchtend zu den Bohrungen 15 angeordnet.

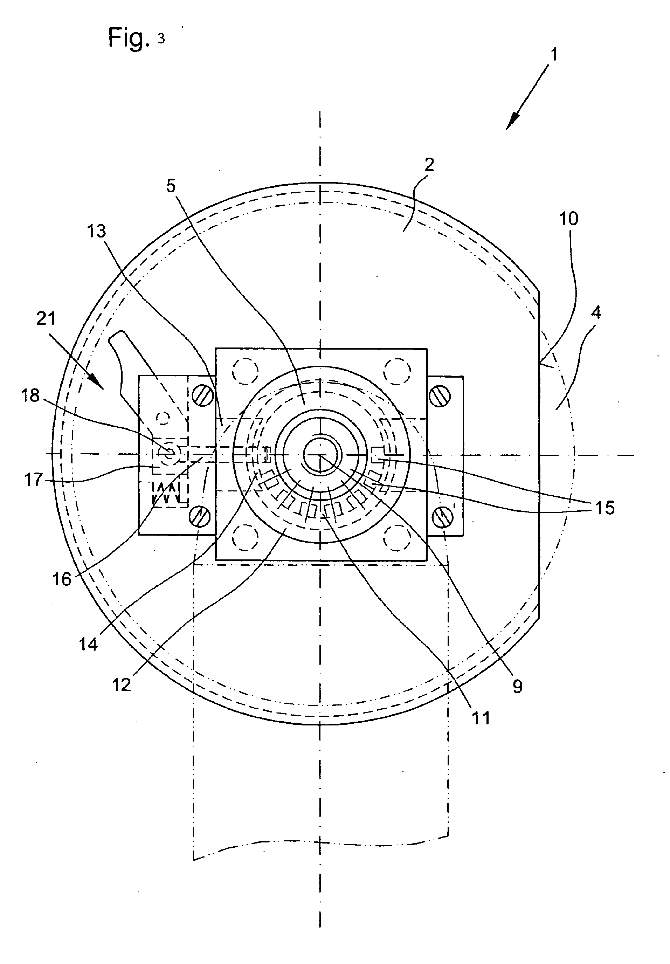

Zur Betätigung des Stiftes 16 sind an diesem der Hülse 11 abgewandten Ende ein Winkelhebel 17, wie dies insbesondere Figur 3 zu entnehmen ist, vorgesehen. Der Winkelhebel 17 ist mittels eines Lagers 18 an dem Gehäuse 2 abgestützt.

Wird nunmehr der Winkelhebel 17 in Richtung der Rotationsachse 9 bewegt, so löst sich der Stift 16 aus der jeweiligen Bohrung 15 der Hülse 11 und gibt demnach die Hülse 11 frei, so dass diese, beispielsweise über den Haltegriff 8, in unterschiedliche Winkelpositionen ausgerichtet werden kann. Eine derartige Verschwenkung der Hülse 11 bewirkt automatisch, dass auch der Haltegriff 8 gegenüber der Rotationsachse 9 und folglich auch gegenüber der Austrittsöffnung 10 in unterschiedliche Winkelpositionen überführt werden kann.

Damit die ausgewählte Winkelposition des Haltegriffes 8 während des Einsatzes des Handarbeitsgerätes 1 nicht, beispielsweise durch die manuell aufgebrachte Kraft, verstellt wird, ist die Arretiervorrichtung 21 derart zu betätigen, dass der Winkelhebel 17 den Stift 16 wieder in eine Bohrung 25 zurückschnappen lässt, so dass die Hülse 11 von dem Stift 16 arretiert ist.

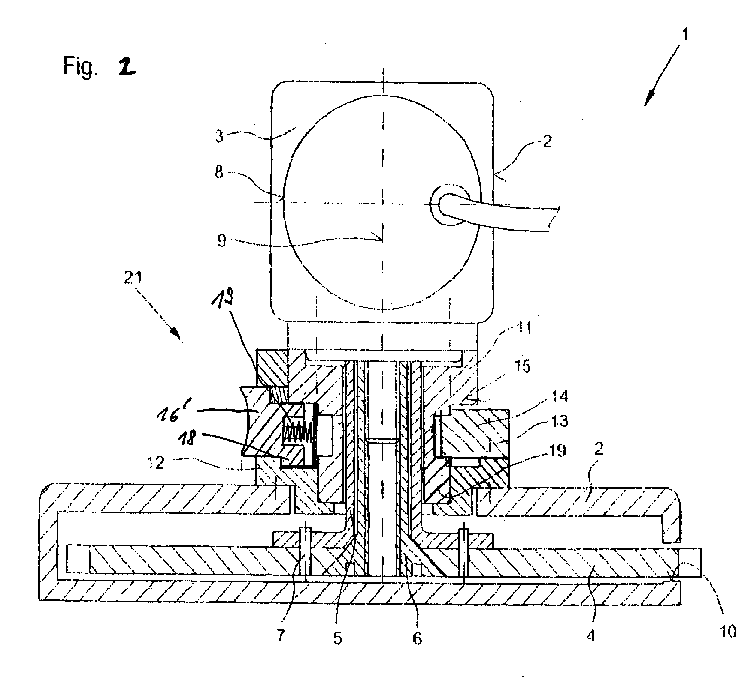

Anstatt des Winkelhebels 17 kann der Stift 16 auch mittels eines Gewinde in dem Gehäuse 2 abgestützt sein, so dass durch Verdrehen des Gewinde-Stiftes 16 eine Arretierung der Hülse 11 bewirkt werden kann, da zwischen dem Stift 16 und der Hülse 11 eine reibschlüssige Wirkverbindung entsteht. Die in den Figuren 1 und 2 gezeigte Wirkverbindung zwischen dem Stift 16 und der Hülse 11 ist dagegen formschlüssig.

In Figur 2 weist die Arretiervorrichtung 21 einen gegenüber dem in Figur 1 dargestellten Stift 16 andersartig ausgebildeten Stift 16' auf, an dem eine in Richtung des Zwischengliedes 12 ausgerichtete Haltenase 18 angebracht ist, die mit dem Zwischenglied 12 derart zusammenwirkt, dass durch Betätigen des Stiftes 16' in Richtung der Rotationsachse der Frässcheibe 4 die formschlüssige Wirkverbindung zwischen der Haltenase 18 und dem Zwischenglied 12 gelöst wird, so dass die Hülse 11 um die Rotationsachse der Frässcheibe 4 verdrehbar ist. In das Zwischenglied 12 sind eine Vielzahl von Ausnehmungen eingearbeitet, in die die Haltenase 18 des Stiftes 16' eingreifen und folglich durch das Zwischenglied 12 arretiert sind, so dass die Hülse 11 festgelegt ist.

Es ist auch denkbar, dass der Stift 16' an dem Gehäuse 2 angebracht ist und parallel zu der Rotationsachse der Frässcheibe 4 verläuft, so dass der Stift 16' senkrecht auf das Zwischenglied 12 einwirkt.

Der Stift 16' wird gegen die Kraft einer Feder 19 betätigt, die sich an der Hülse 11 abstützt. Zwischen dieser und dem Zwischenglied 12 ist der Stift 16' gehalten.

## Patentansprüche

1. Handarbeitsgerät (1) mit einer in einem Gehäuse (2) des Handarbeitsgerätes (1) angeordneten Frässcheibe (4) und mit einer in einer Hülse (11) gehaltenen Antriebswelle (5), die trieblich mit einem Motor (3) des Handarbeitsgerätes (1) und mit der Frässcheibe (4) verbunden ist, wobei die Hülse (11) in einem fest in Richtung der Antriebswelle (5) an dem Gehäuse (2) befestigten Zwischenglied (12) geführt und in diesem verdrehbar gehalten ist und wobei die Hülse (11) durch eine Arretiervorrichtung (21) relativ zu dem Zwischenglied (12) in unterschiedlichen Winkelpositionen fixierbar ist,
**dadurch gekennzeichnet,**
**dass** die Arretiervorrichtung (21) und das Zwischenglied (12) oder die Arretiervorrichtung (21) und die Hülse (11) ein gemeinsames Bauteil bilden, dass in dem Zwischenglied (12) eine Aufnahmebohrung (19) eingearbeitet ist, in die die Hülse (11) eingeführt ist, dass in die Hülse (11) eine umlaufende Ausnehmung (14) vorgesehen ist, in die mindestens eine Haltebacke (13) eingreift, durch die eine Bewegung der Hülse (11) in Richtung der Rotationsachse (9) der Antriebswelle (5) verhindert ist, und dass die jeweilige Haltebacke (13) lösbar mit dem Zwischenglied (12) derart verbunden ist, dass die Haltebacke (13) von dem Zwischenglied (12) zur Demontage bzw. Montage der Hülse (11) abnehmbar ist.

2. Handarbeitsgerät nach Anspruch 1,
**dadurch gekennzeichnet,**
**dass** die Arretiervorrichtung (21) aus einem am Zwischenglied (12) oder am Gehäuse (2) abgestützten Stift (16), Bolzen, Wippe oder dergleichen besteht, der reib- oder formschlüssig mit der Hülse (11) oder dem Zwischenglied (12) in Wirkverbindung steht.

3. Handarbeitsgerät nach Anspruch 2,
**dadurch gekennzeichnet,**
**dass** in Umfangsrichtung der Hülse (11) in dieser eine Vielzahl von Bohrungen (15) eingearbeitet sind, in die der Stift (16) eingreift.

4. Handarbeitsgerät nach Anspruch 1,
**dadurch gekennzeichnet,**
**dass** jeweils zwei Haltebacken (13) diametral zueinander angeordnet sind.

5. Handarbeitsgerät nach Anspruch 1,
**dadurch gekennzeichnet,**
**dass** in eine der Haltebacken (13) eine Durchgangsbohrung (20) eingearbeitet ist, dass der Stift (16) der Arretiervorrichtung (21) die Durchgangsbohrung (20) durchgreift, und dass der Stift (16) auf die Außenfläche der Hülse (11) einwirkt.

6. Handarbeitsgerät nach Anspruch 1,
**dadurch gekennzeichnet,**
**dass** die der Hülse (11) abgewandte Seite des Stiftes (16) mit einer Wippe, mit einem Winkelhebel (17), mit einer Feder oder dgl. in Wirkverbindung steht.

7. Handarbeitsgerät nach Anspruch 6,
**dadurch gekennzeichnet,**
**dass** die Wippe oder der Winkelhebel (17) am Gehäuse (2) oder an einem der Haltebacken (13) verschwenkbar abgestützt ist.

8. Handarbeitsgerät nach Anspruch 5,
**dadurch gekennzeichnet,**
**dass** die Durchgangsbohrung (20) mit einem Gewinde versehen ist, durch das eine Spannschraube, die auf die Oberfläche der Hülse (11) einwirkt, gehalten ist.

## Claims

1. A hand tool (1) with a cutting disc (4) arranged in a housing (2) of the hand tool (1) and with a drive shaft (5) held in a sleeve (11) that is in a driving connection with a motor (3) of the hand tool (1) and with the cutting disc (4), in which case the sleeve (11) is guided in an intermediate element (12) firmly attached in the direction of the drive shaft (5) on the housing (2) and the sleeve (11) is held in this intermediate element (12) in a rotating arrangement, and in which case the sleeve (11) can be secured by a locking device (21) relative to the intermediate element (12) in different angle positions,
**characterised in that**,
the locking device (21) and the intermediate element (12) or the locking device (21) and the sleeve (11) form a common component, that the intermediate element (12) has an accommodation hole (19) worked into it with the sleeve (11) inserted in the hole (19), that the sleeve (11) has a circumferential opening (14) provided in it, into which at least one holding jaw 813) engages, by means of which a movement of the sleeve (11) in the direction of the axis of rotation (9) of the drive shaft (5) is prevented, and that the corresponding holding jaw (13) is connected in a releasable arrangement with the intermediate element (12) in such a way that the holding jaw (13) can be removed from the intermediate element (12) for removal or installation of the sleeve (11).

2. The hand tool in accordance with Claim 1,
**characterised in that**,
the locking device (21) comprises a pin (16), bolt, rocker or the like supported on the intermediate element (12) or on the housing, which is in a friction or force-locking connection with the sleeve (11) or the intermediate element (12).

3. The hand tool in accordance with Claim 2,
**characterised in that**,
a plurality of holes (15) is worked into the sleeve (11) in the circumferential direction of the sleeve (11), and the pin (16) engages in them.

4. The hand tool in accordance with Claim 1,
**characterised in that**,
each pair of holding jaws (13) is arranged diametrically opposite to one another.

5. The hand tool in accordance with Claim 1,
**characterised in that**,
a passage hole (20) is worked into one of the holding jaws (13), that the pin (16) of the locking device (21) passes through the passage hole (20) and that the pin (16) acts on the outside surface of the sleeve (11).

6. The hand tool in accordance with Claim 1,
**characterised in that**,
the side of the pin (16) facing away from the sleeve (11) is in an active connection with a rocker, with an angle lever (17), with a spring or the like.

7. The hand tool in accordance with Claim 6,
**characterised in that**,
the rocker or the angle lever (17) is supported on the housing (2) or on one of the holding jaws (13) in a swivelling arrangement.

8. The hand tool in accordance with Claim 5,
**characterised in that**,
the passage hole (20) is provided with a thread by means of which a clamping screw which acts on the surface of the sleeve (11) is held.

## Revendications

1. Outil à main (1) comprenant un disque de fraisage (4) disposé dans un boîtier (2) de l'outil à main (1) et un arbre d'entraînement (5) retenu dans une douille (11) qui est entraîné par le moteur (3) de l'outil à main (1) et lié au disque de fraisage (4), la douille (11) étant guidée dans un élément intermédiaire (12) et retenue en rotation dans celui-ci, l'élément intermédiaire (12) étant rigidement fixé en direction de l'arbre d'entraînement (5) sur le boîtier (2), et où, moyennant un dispositif d'arrêt (21), la douille (11) se laisse positionner sous divers angles par rapport à l'élément intermédiaire (12),
**caractérisé en ce que**
le dispositif d'arrêt (21) et l'élément intermédiaire (12) ou le dispositif d'arrêt (21) et la douille (11) forment un composant commun, que dans l'élément intermédiaire (12), il est pratiqué un alésage de logement (19) dans lequel est introduite la douille (11), que sur la douille (11), il est pratiqué un évidement (14) suivant le pourtour, dans lequel s'engrène au moins un mors de retient (13) qui empêche le mouvement de la douille (11) en direction de l'axe de rotation (9) de l'arbre d'entraînement (5), et que le mors de retient respectif (13) est lié de manière détachable avec l'élément intermédiaire (12) de sorte que le mors de retient (13) puisse être déposé de l'élément intermédiaire (12) en vue du démontage ou du montage de la douille (11).

2. Outil à main d'après la revendication 1,
**caractérisé en ce que**
le dispositif d'arrêt (21) consiste en un goujon (16), un boulon, une bascule ou un élément similaire, appuyé sur l'élément intermédiaire (12) ou sur le boîtier (2) et qui est lié sous pression et par fermeture géométrique avec la douille (11) ou l'élément intermédiaire (12).

3. Outil à main d'après la revendication 2,
**caractérisé en ce que**,
en direction du pourtour de la douille (11), il est pratiqué dans celle-ci de nombreux alésages (15) dans lesquels s'engrène le goujon (16).

4. Outil à main d'après la revendication 1,
**caractérisé en ce que**
respectivement deux mors de retient (13) sont opposés diamétralement.

5. Outil à main d'après la revendication 1,
**caractérisé en ce que**
dans un des mors de retient (13), il est pratiqué un perçage (20), que le goujon (16) du dispositif d'arrêt (21) passe à travers le perçage (20) et que le goujon (16) agit sur la face extérieure de la douille (11).

6. Outil à main d'après la revendication 1,
**caractérisé en ce que**
la face du goujon (16) éloignée de la douille (11) est liée par entraînement avec une bascule, avec un levier angulaire (17), avec un ressort ou avec un élément similaire.

7. Outil à main d'après la revendication 6,
**caractérisé en ce que**
la bascule ou le levier angulaire (17) sont retenus de manière pivotante sur le boîtier (2) ou sur un des mors de retient (13).

8. Outil à main d'après la revendication 5,
**caractérisé en ce que**
le perçage (20) possède un filetage retenant la vis de serrage agissant sur la surface de la douille (11).
